Europäisches Patentamt

European Patent Office

Office européen des brevets

(11) Veröffentlichungsnummer: **0 191 340**
**B1**

(12) **EUROPÄISCHE PATENTSCHRIFT**

(45) Veröffentlichungstag der Patentschrift: **16.01.91**

(51) Int. Cl.⁵: **H 04 N 3/233**

(21) Anmeldenummer: **86101006.4**

(22) Anmeldetag: **25.01.86**

(54) **Schaltung zur Korrektur von Verzeichnungen, in vertikaler Richtung (N-S) bei Kathodenstrahlröhren mit Weitwinkelablenkung.**

(30) Priorität: **26.01.85 DE 3502622**

(43) Veröffentlichungstag der Anmeldung:
**20.08.86 Patentblatt 86/34**

(45) Bekanntmachung des Hinweises auf die Patenterteilung:
**16.01.91 Patentblatt 91/03**

(84) Benannte Vertragsstaaten:
**AT BE CH DE FR GB IT LI LU NL SE**

(56) Entgegenhaltungen:
**DE-A-2 010 814**

**TELEFUNKEN SPRECHER, Nr. 68, Februar 1976, Seiten 3-32, Empelde, DE; H. UHLENHUT: "Farbfernsehchassis 712"**

(73) Patentinhaber: **Deutsche Thomson-Brandt GmbH**
**Hermann-Schwer-Strasse 3 Postfach 1307**
**D-7730 Villingen-Schwenningen (DE)**

(72) Erfinder: **Rilly, Gerard**
**Panoramaweg 6**
**D-7731 Unterkirnach (DE)**

## Beschreibung

Die Erfindung geht aus von einer Schaltung zur Korrektur von Verzeichnungen in vertikaler Richtung bei Kathodenstrahlröhren gemäß dem Oberbegriff des Anspruchs 1. Eine derartige Schaltung ist bekannt durch die DE—A—2 010 814.

Bei einer derartigen Schaltung sind im allgemeinen die Vertikalablenkspulen an die Sekundärwicklung eines Transformators angeschlossen, dessen Primärwicklung im Ausgangskreis eines Verstärkers liegt, der von einer vertikalfrequenten Spannung gesteuert wird. Für die Korrektur der Verzeichnungen ist es daher erforderlich, dem Vertikal-Ablenkstrom den beschreibenen Korrekturstrom zu überlagern.

Der Erfindung liegt die Aufgabe zugrunde, eine einfache Schaltung zu schaffen, mit der eine derartige Überlagerung bei gleichzeitiger galvanischer Trennung zwischen den Schaltungen für den eigentlichen Ablenkstrom und den Korrekturstrom möglich ist.

Diese Aufgabe wird durch die im Anspruch 1 angegebene Erfindung gelöst. Vorteilhafte Weiterbildungen der Erfindung sind in den abhängige Ansprüchen angegeben.

Zur näheren Erläuterung der Erfindung werden im folgenden mehrere Ausführungsbespiele an Hand der Zeichnungen beschrieben. Diese zeigen in

Fig. 1 eine bekannte Schaltung,

Fig. 2, 3 und 4 Kurven zur Erläuterung der Wirkungsweise der schaltung nach Fig. 1,

Fig. 5, 6, 7 Bildschimdarstellungen,

Fig. 8, 9 Schaltungen zur Korrektur,

Fig. 10 eine Bildschirmdarstellung mit einer Innenverzeichnung,

Fig. 11 die Schaltung eines erprobten Ausführungsbespiels und

Fig. 12—17 Signale aus Fig. 11.

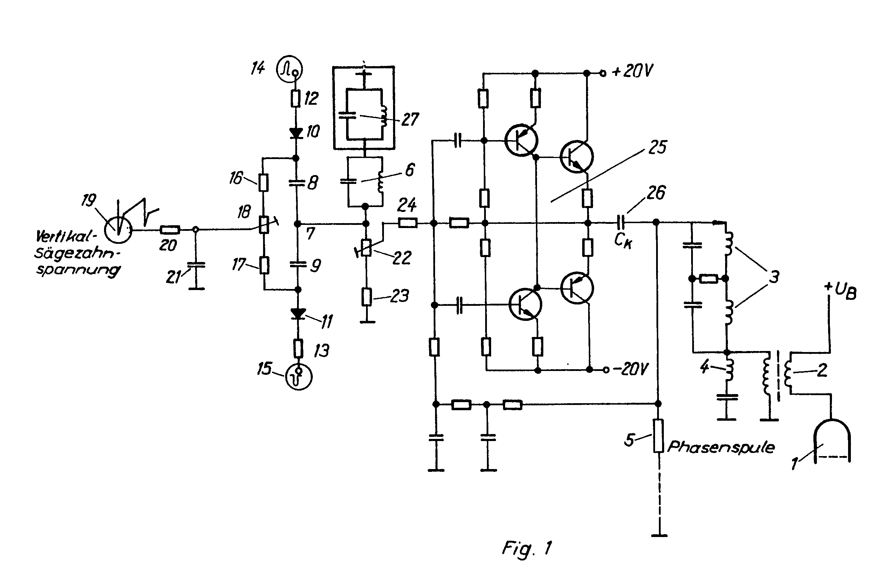

Fig. 1 zeigt eine Vertikal-Ablenkschaltung mit einer Vertikal-Ausgangsröhre 1, in deren Anodenkreis die Primärwicklung eines Vertikalausgangsübertragers 2 eingeschaltet ist. In den Sekundärkreis des Vertikalausgangsübertragers 2 sind Ablenkspulen 3 geschaltet sowie ein Serienresonanzkreis 4, der auf die Zielenfrequenz abgestimmt ist. Die der Sekundärwicklung des Vertikalausgangsübertragers 2 abgewandte Seite der Ablenkspulen 3 ist über eine Induktivität 5, die sogenannte Phasenspule, mit Masse oder einer zur Einstellung einer Bildverschiebung dienenden Gleichspannungsquelle verbunden. In die Ablenkspulen 3 wird ein Korrekturstrom eingespeist, um Kissenverzerrungen in vertikaler Richtung zu korrigieren. Der Korrekturstrom ist ein im wesentlichen zeilenfrequenter, parabelförmiger Strom mit einer Amplitude, die proportional der Vertikalablenkung ist. Bei der in Fig. 1 dargestellten Schaltung wird die Parabelform des Korrekturstromes durch eine Kosinusform angenähert. Dies geschieht durch einen Parallelresonanzkreis 6, der an den Abgriff 7 zweier Kondensatoren 8 und 9 angeschlossen ist, die über Dioden 10 bzw. 11 und Widerstände 12 bzw.

13 an Queelen 14 bzw. 15 positiver bzw. negativer Rücklaufimpulse angeschlossen sind. Parallel zu den Kondensatoren 8, 9, die auch durch die Widerstände 12, 13 ersetzt werden können, liegt die Serienschaltung dreier Widerstände 16, 17, 18, von der der mittlere Widerstand 18 als Potentiometer ausgebildet ist. Der Abgriff des Potentiometers 18 liegt an einer Quelle vertikalfrequenter Sägezahnspannung unter Einfügung einer RC-Schaltung 20, 21. Parallel zum Parallelresonanzkreis 6 liegt ein Potentiometer 22, 23, dessen Abgriff über einen Widerstand 24 dem Steuerelektrodenkreis einer Verstärkerschaltung 25 zugeführt wird, deren Ausgangsstrom über eine Koppelkapazität 26 in den Ablenkspulenkreis 3 angespeist wird. Die Wirkungsweise der soweit beschriebenen Schaltung ist in der Broschüre "Information über Farfernsehempfängertechnik" von VALVO ausführlich beschrieben. Diese Schaltung hat den Nachteil, daß die Annäherung an einen parabelförmigen Korrekturstrom durch eine Kosinusform noch immer eine Welligkeit der Zeilen, insbesondere am oberen und unterent Bildrand läßt. In Serie zum Parallelresonanzkreis 6 ist ein weiterer Parallelresonanzkreis 27 eingeschaltet, dessen Bemessung so gewählt ist, daß ein Extremwert der angeregten Scwingung etwa in Zeilenmitte liegt und die Schwingungsdauer etwa gleich dem zeitlichen Abstand zweier Bildpunkte größter vertikaler Abweichung vom Idealverlauf einer Zeile ist.

Der Resonanzkreis 6 ist auf Zeilenfrequenz abgestimmt und erzeugt über den Verstärker und den an dessen Ausgang durch den Koppelkondensator 26 und die Phasenspule 5 gebildeten Serienresonanzkreis die Grundkorrektur für die Kissenverzeichnung. Der zweite Parallelresonanzkreis 27 ist so abgestimmt, daß er die verbleibende Welligkeit unterbindet. Bei einem praktisch erprobten Ausführungsbeispiel ist dies bei einer Abstimmung auf 36 kHz der Fall, wenn die Zeilenfrequenz 15 625 Hz beträgt. Die Tatsache, daß 36 kHz kein ganzes Vielfaches der Zeilenfrequenz ist, daß also die Anregung nicht in Resonanz erfolgt, scheint überraschend. Dies dürfte darauf zurückzuführen sein, daß die Rücklaufdauer hier einen Einfluß ausübt. Zu beachten ist bei der Bemessung der Schaltung besonders, daß eine Dämpfung des Kreises schädlich ist, da er für 2T frei schwingt und eine zu starker Amplitudenabfall des zweiten Schwingungszuges sich derart bemerkbar macht, daß die linke und die rechte Bildhälfte unterschiedlich gute Korrekturen zeigen.

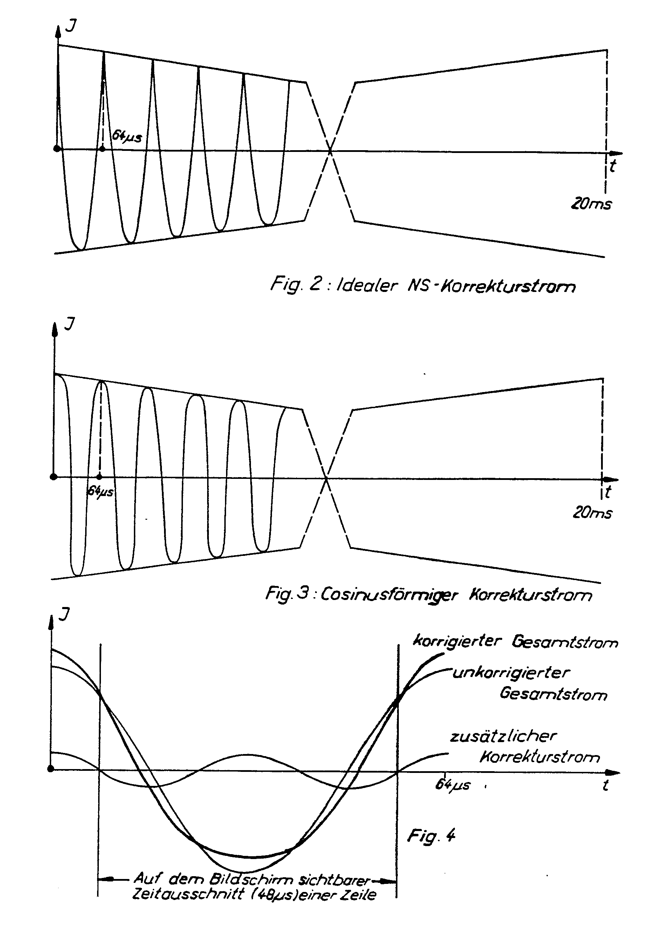

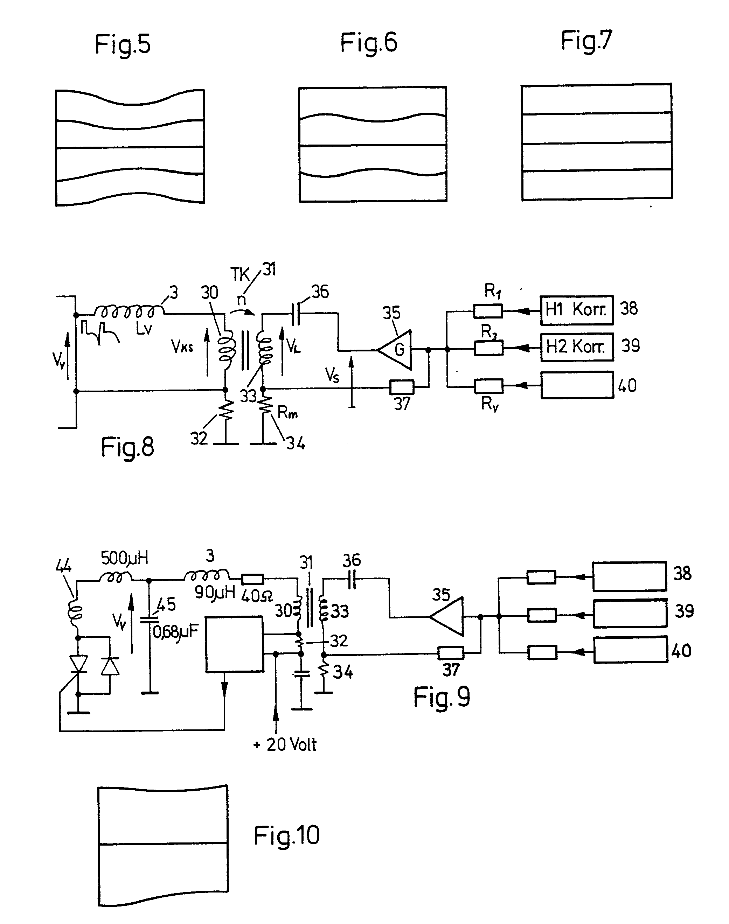

Fig. 2 zeigt einen idealen Verlauf des Nord-Süd-Korrekturstromes. Hier ist eine ziemlich exakte Parabel für den Korrekturstrom dargestellt. Fig. 3 zeigt den bei der bekannten Schaltung verwendeten kosinusförmigen Korrekturstrom und Fig. 4 den aus dem kosinusförmigen Korrekturstrom und dem zusätzlichen Korrekturstrom zusammengesetzten Gesamtkorrekturstrom, wie er bei der soweit beschriebenen Schaltung den Ablenkspulen zugeführt wird.

Fig. 5, 6 und 7 zeigen Darstellungen an sich waagerechter Linien, die in Fig. 5 one Korrektur, in Fig. 6 mit Sinus-H1-Korrektur und in Fig. 7 mit zusätzlicher Sinus-H2-Korrektur wiedergegeben werden.

Fig. 8 zeigt eine Korrekturschaltung mit einer von einer Vertikalablenkschaltung gespeisten Ablenkspule 3, die in Serie mit der Sekundärwicklung 30 eines Transformators 31 und eines Rückkopplungswiderstandes 32 geschaltet ist. Vom Widerstand 32 wird zu Stromrückkopplung eine Steuergröße abgenommen und der Vertikalablenkschaltung zugeführt. Die Primärwicklung 33 des Transformators 31 ist ebenfalls mit einem Widerstand 34 in Serie geschaltet. Vom diesem Widerstand 34 wird eine Steuergröße abgegriffen und eine Verstärker 35 zugeführt. Dem Eingang des Verstärkers 35 werden die Korrektursignale H1, H2 und ggf. ein Signal zur Korrektur einer weiteren Verzeichnung von Quellen 38, 39, 40 zugeführt. Der Ausgang des Verstärkers 35 ist mit der Primärwicklung 33 über einen Kondensator 36 verbunden. Der Eingang des Verstärkers 35 ist mit dem Widerstand 34 über einen Widerstand 37 verbunden. Die Korrektursignalspannungen der Quellen 38, 39 und/oder 40 werden durch die Stromrückkopplung des Verstärkers 35 in Ströme umgewandelt.

In Fig. 9 ist eine Vertikalablenkschaltung mit einer Thyristor-Schaltung dargestellt. Bei dieser Schaltung entsteht am Kondensator 45 eine vom Zeilenablenktransformator eingeführte Zeilenkomponente, die in der Vertikalablenkspule 3 einen Störstrom erzeugt.

Fig. 10 zeigt die bewirkte Störung des Bildes. Dieser Störstromg wird durch die Quelle 40 ausgeglichen.

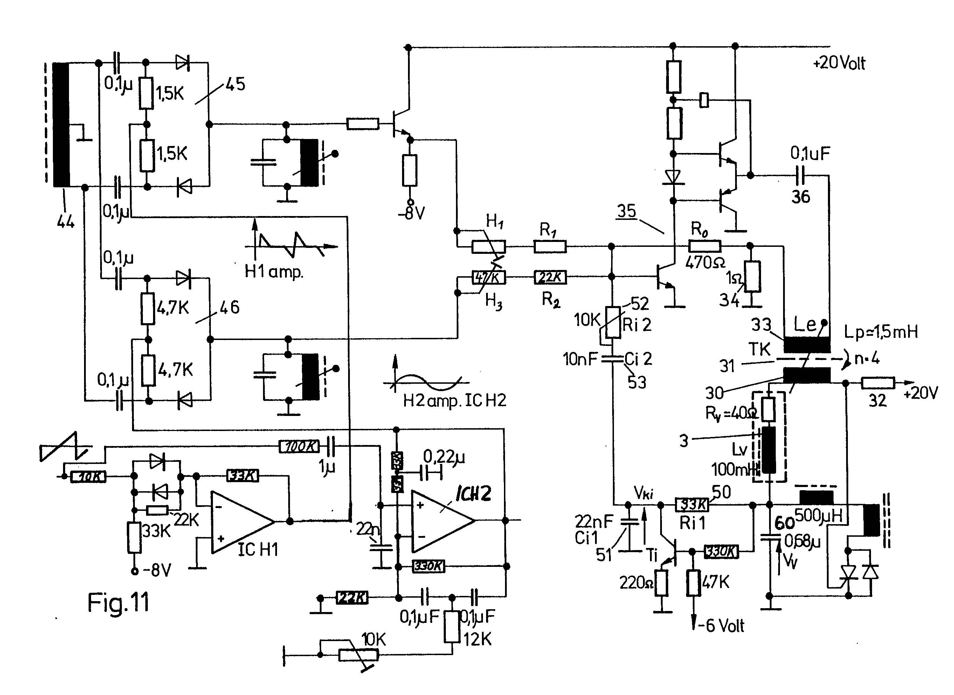

In Fig. 11 ist eine erprobte Schaltung dargestellt. Zwei vom Zeilenablenktransformator 44 gesteuerte Modulatoren 45, 46 erzeugen Spannungen VK H1 bzw. VK H2, die den Stromkorrekturen entsprechen. Mit dem IC H1 bzw. ICH2 werden vertikalfrequente Signale erzeugt, die der Amplitude und Phase der Korrekturen entsprechen. Da die H1-Korrektur beherrschend ist, muß die Kapazität 36 mit der effektiven Induktanz Le über die Zeilenfrequenz abgestimmt werden. Zur Korrektur der Innenverzeichnung wird die Spannung Vv am Kondensator 60 durch das RC-Glied 50, 51 integriert und über das RC-Glied 52, 53 dem Verstärker 35 zugeführt.

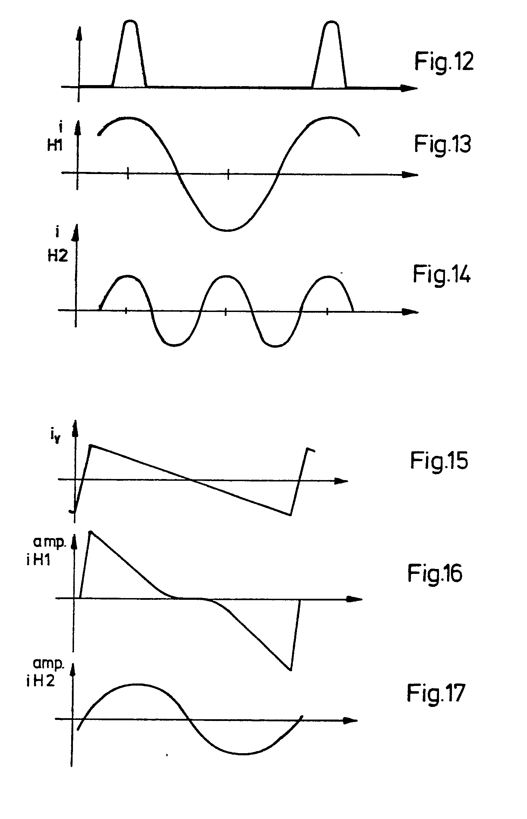

Fig. 12 zeigt die Zeilenimpulse von der Zeilenablenkschaltung 44.

Fig. 13 zeigt die sinusförmige H1-Stromkorrektur in der Vertikalablenkspule 3.

Fig. 14 zeigt die sinusförmige H1-Stromkorrektur in der Vertikalablenkspule 3.

Fig. 15—17 zeigen die in Amplitude und Phase vom Vertikalablenkstrom abhängigen Signalformen.

In Fig. 16 muß die Amplitude von H1 (Vertikalfrequenz) wegen der erforderlichen Symmetrie für die Korrektur um 180° umgedreht werden zwischen dem oberen und unteren Bildrand.

Fig. 17 gibt die Amplitude von H2 an.

In Fig. 11 sind dem Schaltkreis ICH 2 ein Tiefpaß (100K + 22nF) und eine Doppel-T-Kreis zugeordnet. Durch den Tiefpaß werden negativ gerichtete Flanken abgeflacht. Wird die Phase gedreht, bleibt die Amplitude fest. Bei maximaler Amplitude ist die Phase richtig eingestellt. Der Kreis wirkt als Filter, so daß keine unerwünschten Schwingungen erzeugt werden. Beim Schaltkreis ICH 1 ist den beiden Dioden ein Widerstand parallel geeschaltet. Dadurch wird der Kurvenverlauf in Bildmitte flach. Die Kurve wird schiefer, aber nicht so steil wie am Ende.

## Patentansprüche

1. Schaltung zur Korrektur von Verzeichnungen in vertakaler Richtung (Nord/Süd) bei Kathodenstrahlröhren mit Weitwinkelablenkung und Bildschirnen mit geringer oder kleiner Bildschirmwölbung, mit einem Transformator (31) und einem Verstärker (35), wobei dem Vertikal-Ablenkstrom ein im wesentlichen cosinus- oder parabelförmiger, zeilenfrequenter Korrekturstrom mit einer von der Vertikalablenkung abhängigen Amplitude überlagert und der Korrekturstrom so bemessen ist, daß er etwa in Zeilenmitte ein Maximum hat, und in den Vertikalablenkkreis ein weiterer Korrekturstrom eingespeist wird, dessen weiterer Korrekturstrom eingespeist wird, dessen Frequenz wenigstens das Doppelte der Frequenz des ersten Korrekturstroms ist und der eine Schwingungsmaximum in Bildmitte hat, dadurch gekennzeichnet, daß Mittel zum Betreiben der Vertikalablenkung mit Stromrückkopplung vorgesehen sind und daß in Serie zu den Vertikalablenkspulen (3) die Sekundärwicklung (30) des Transformators (31) geschaltet ist, dessen Primärwicklung (33) über eine Kapazität (36) mit dem Ausgang des Verstärkers (35) zur Verstärkung der Korrekturströme verbunden ist.

2. Schaltung nach Anspruch 1, dadurch gekennzeichnet, daß in Serie zu den Wicklungen des Transformators (31) je ein Widerstand (32, 34) geschaltet ist und daß von dem einen Widerstand die Stromrückkopplung für die Vertikalablenkschaltung und von dem anderen Widerstand eine Stromrückkopplung für den Verstärker (35) für die Korrekturströme abgeleitet wird.

3. Schaltung nach Anspruch 2, dadurch gekennzeichnet, daß zum Ausgleich eines zeilenfrequenten Störstromes in der Vertikalablenkspule die Vertikalablenkspannung (Vv) integriert und die daraus erzielte Spannung als Korrekturspannung dem Verstärker (35) augeführt wird.

## Revendications

1. Circuit pour la correction de distorsions dans le sens vertical (nord/sud) pour tubes à rayons cathodiques à déflexion grand-angle et écrans à faible ou petite courbure d'écran avec un transformateur (31) et un amplificateur (35), un courant de correction à fréquence de lignes, substantiellement en forme de cosinus ou de parabole, étant superposé au courant de balayage vertical avec une amplitude en fonction du balayage vertical et le courant de correction étant dimensionné de manière telle qu'il a un maximum à peu près au milieu de la ligne et qu'un autre courant de correction est amené au circuit de balayage vertical, autre courant dont la fréquence est au moins le double de la fréquence du premier courant de correction et qui a un maximum d'oscillation au milieu de l'image, caractérisé en ce que des moyens sont prévus pour le fonctionnement du balayage vertical avec réaction de courant et que l'enroulement secondaire (30) du transformateur (31) est monté en série avec les bobines de déflexion verticale (3), transformateur dont l'enroulement primaire (33) est relié à la sortie de l'amplificateur (35) pour l'amplification des courants de correction par un condensateur (36).

2. Circuit selon la revendication 1, caractérisé en ce qu'une résistance (32, 34) est montée respectivement en série avec chacun des enroulements du transformateur (31) et que la réaction de courant pour le circuit de balayage vertical est dérivée de l'une des résistances et qu'une réaction de courant pour l'amplificateur (35) pour les courants de correction est dérivée de l'autre résistance.

3. Circuit selon la revendication 2, caractérisé en ce que la tension de balayage vertical (Vv) est intégrée pour la compensation d'un courant d'interférence à fréquence de lignes dans la bobine de déflexion verticale et que la tension qui en résulte est amenée à l'amplificateur (35) comme tension de correction.

**Claims**

1. A circuit for the correction of distortions in the vertical direction (north/south) in cathode ray tubes with wide-angle deflection and viewing screens with little or small screen curvature, having a transformer (31) and an amplifier (35), wherein a substantially cosine or parabolic, line-frequency correction current with an amplitude depending on the vertical deflection is superimposed on the vertical deflection current, and the correction current is so dimensioned that it has a maximum substantially in the middle of the line, and a further correction current, the frequency of which is at least double the frequency of the first correction current and which has a peak of oscillation in the middle of the frame is fed into the vertical deflection circuit, characterised in that means are provided to operate the vertical deflection with current feedback, and that the secondary winding (30) of the transformer (31) is connected in series with the vertical deflection coils (3), the primary winding (33) of the transformer being connected through a capacitor (36) to the output of the amplifier (35) to amplify the correction currents.

2. A circuit according to Claim 1, characterised in that a resistor (32, 34) is connected in series with each of the windings of the transformer (31), and that the current feedback for the vertical deflection circuit is derived from the one resistor and a current feedback for the amplifier (35) for the correction currents is derived from the other resistor.

3. A circuit according to Claim 2, characterised in that in order to compensate for a line-frequency disturbing current in the vertical deflection coil, the vertical deflection voltage (Vv) is integrated and the voltage obtained therefrom is fed to the amplifier (35) as a correction voltage.

Fig. 1

1

Fig. 2 : Idealer NS-Korrekturstrom

Fig. 3 : Cosinusförmiger Korrekturstrom

korrigierter Gesamtstrom

unkorrigierter Gesamtstrom

zusätzlicher Korrekturstrom

Fig. 4

Auf dem Bildschirm sichtbarer Zeitausschnitt (48µs)einer Zeile

### Fig.5

### Fig.6

### Fig.7

Fig.8

Fig.9

Fig.10

Fig.11

Fig.12

Fig.13

Fig.14

Fig.15

Fig.16

Fig.17